Europäisches Patentamt

European Patent Office

Office européen des brevets

(11) Publication number: 0 498 439 A1

# EUROPEAN PATENT APPLICATION

(21) Application number: 92102018.6

(22) Date of filing: 06.02.92

(51) Int. Cl.5: B65G 47/90

(30) Priority: 06.02.91 JP 38009/91

(43) Date of publication of application:
12.08.92 Bulletin 92/33

(84) Designated Contracting States:
DE ES FR GB IT

(71) Applicant: INAX CORPORATION
6 Koiehonmachi 3-chome
Tokoname-Shi Aichi-Ken 479(JP)

(72) Inventor: Motegi, Kentaro
3-6 Koiehonmachi, Tokoname-shi
Aichi-ken(JP)
Inventor: Bito, Kazuhiko
3-6 Koiehonmachi, Tokoname-shi

Aichi-ken(JP)
Inventor: Aihara, Yuichiro
3-6 Koiehonmachi, Tokoname-shi
Aichi-ken(JP)
Inventor: Shinha, Kochi
3-6 Koiehonmachi, Tokoname-shi
Aichi-ken(JP)
Inventor: Morishita, Mineyuki
3-6 Koiehonmachi, Tokoname-shi
Aichi-ken(JP)

(74) Representative: DIEHL GLAESER HILTL &
PARTNER
Flüggenstrasse 13
W-8000 München 19(DE)

(54) Transfer apparatus for a sanitary earthenware not-burnt product.

(57) A transfer apparatus (1) which is provided with a movable frame (5) laterally movably disposed, a lifting shaft (8) vertically movably provided at the lower end of the movable frame (5), a rotary cylinder (10) provided at the lower end of the lifting shaft (8), clamp cylinders (11) provided at the lower end of the rotary cylinder (10), clamp frames (12) laterally movably adjustable to a distance therebetween, and clamp hoses (13) provided inside the clamp frames (12) and expandable by taking in air, and which can embrace the sanitary earthenware not-burnt product (W) different in the size and configuration properly corresponding thereto and transfer the product (W) to a predetermined position by use of a conveyor (C) or the like.

FIG.

The present invention relates to a transfer apparatus for transferring a sanitary earthenware not-burnt product to a glazing apparatus through a conveyor or the like.

Conventionally a sanitary earthenware, such as a stool, is dried after molding, a not-burnt product after drying is sprayed with glaze by use of a glazing apparatus, and thereafter it is burnt in a kiln to the final product. The sanitary earthenware not-burnt product, however, must be transferred from the conveyor to the glazing apparatus during the process, and is applied with the glaze in a spraying manner by use of a robot, so that it must be transferred to an accurate position on a rotary table of the glazing apparatus from a pallet at the conveyor. In the prior art, such work is manually performed.

In such manual transfer and transportation, the sanitary earthenware not-burnt product is very easy to break so that offen it creates defectives or the like. Even if an automatic apparatus therefore is intended to be manufactured for product transfer, there are many kinds and numbers of instruments of the sanitary earthenware, which are different in various configurations, thereby creating the problem that it is extremely difficult to manufacture an automatic transfer apparatus which can transfer all kinds and numbers of sanitary earthenware and has versatility.

In the light of the conventional problem, the present invention has been designed. An object thereof is to provide a transfer apparatus capable of well transferring the sanitary earthenware not-burnt products various and different in configuration. The essential point thereof is to get the transfer apparatus for transferring the sanitary earthenware not-burnt product to a glazing apparatus or the like by use of the conveyor or the like. The transfer apparatus comprises a movable frame laterally movably disposed, a lifting shaft vertically movably provided at the movable frame, a rotary cylinder provided at the lower end of the lifting shaft, clamp cylinders provided at the lower end of the rotary cylinder, clamp frames laterally movable to adjust a distance therebetween by the clamp cylinders respectively, and clamp hoses which are provided inside the clamp frames and take-in air to be expandable to thereby hold the sanitary earthenware not-burnt product in an embracing manner.

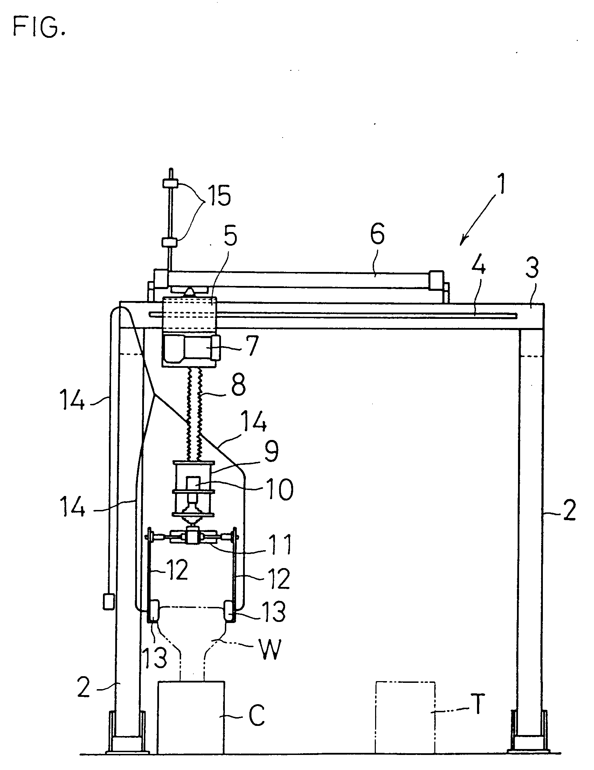

The invention is further explained by the drawing. The Fig. gives a schematic structural view of a transfer apparatus for a sanitary earthenware not-burnt product.

An embodiment of the present invention will be described in accordance with the drawing.

In the transfer apparatus 1, a rail 4 is disposed laterally along an upper beam 3 disposed laterally at the upper ends of supports 2, a movable frame 5 is laterally movably mounted on the upper beam 3 along the rail 4, and an encoder (not shown) is provided in the movable frame 5 for allowing lateral movement to be detected by the encoder.

Also, lifting motor 7 is mounted at the lower portion of the movable frame 5 and a lifting shaft 8 is provided at the movable frame 5 in a hanging manner and forms at the outer periphery a rack in this embodiment, so that the lifting motor 7 rotates to vertically move the lifting shaft 8 through a pinion or the like.

At the lower end of the lifting shaft 8 is mounted an intermediate frame 9, in which a rotary cylinder 10 is provided. The rotary cylinder 10 projects downwardly therefrom a rod, clamp cylinders 11 are laterally mounted at both sides of an end of the rod, and clamp frames 12 are mounted at one end of both clamp cylinders 11 respectively, so that if the clamp cylinders operate, they move the clamp frames 12 for adjusting a distance therebetween.

A clamp hose 13 is mounted at the inside of the lower end of each clamp frame 12 and connected to each air tube 14. The air tubes 14 are integrated into one and connected to an external air compressor or the like, so that air supplied therefrom to the air tubes 14 is taken in the clamp hoses 13 so as to expand them respectively.

Next, explanation will be given on the process wherein such transfer apparatus transfers the sanitary earthenware not-burnt product (to be hereinafter called the work W) by loading it on a conveyor C.

The lifting motor 7 is driven with respect to the work W, in a predetermined position, thereby lowering the lifting shaft 8. The clamp cylinders 11 are operated to adjust a distance between the pair of clamp frames 12 corresponding to the size of work W. In this condition, air is taken in the clamp hoses 13 through the air tubes 14 so as to expand the clamp hoses 13 respectively, whereby the work W can be embraced in a soft touch by the clamp hoses 13. In this state, the lifting motor 7 is rotated to lift the lifting shaft 8, thereby enabling the work W to be lifted from the conveyor C.

In this state, the air cylinder 6 is operated to move the movable frame 5 rightwardly along the rail 4 as shown. In the process of moving, the rotary cylinder 10 is rotated at need and the clamp cylinders 11 and clamp frames 12 are rotated in the proper direction to enable the work W to be changed in orientation. The work W can be placed on a rotary table T of the glazing apparatus in a proper condition corresponding to configuration or the like of the work W and then air is exhausted from the clamp hoses 13, thereby enabling the work W to be well released from the clamp hoses 13.

In addition, the work W can be transferred from the conveyor C directly to the rotary table T without rotating the rotary cylinder 10 according to the configuration of work W. Also, for a large-sized work W, the clamp cylinders 11 can be operated to adjust the distance between the clamp frames 12 by enlarging it. The transfer apparatus of the present invention can properly correspond to a work W different in the size. Moreover, even for a work W considerably different in configuration, the clamp hoses 13 can embrace by elasticity thereof the work W corresponding to a change in configuration thereof.

In addition, a distance in a vertical movement of the lifting shaft 8 can be detected by proximity switches 15 erected from the upper portion of movable frame 5, the proximity switches 15 and the encoder in the movable frame 5 being connected to an external computer. In the computer are stored corresponding to the size and configuration of each work W the movement of the movable frame 5, vertical movement of the lifting shaft 8, whether or not the rotary cylinder 10 rotates, and an adjusting distance of each clamp cylinder 11, the computer being properly controlled according to the kind of each work W.

In addition, when an RF-ID card or the like is stuck in position on the work W, during the rotation for transferring the work W by the conveyor C, the computer discriminates the kind of work W displayed in this card and automatically corresponds to the work W different in various configurations, thereby enabling the respective instruments to be controlled as mentioned above.

Next, explanation will be given on operation of the apparatus of the present invention.

Inside each clamp frame at the transfer apparatus is provided the clamp hose, in which air is taken, so that the clamp hoses expand and can embrace properly in a soft touch the sanitary earthenware not-burnt product even when different in configuration. In the state of embracing the product, the lifting shaft of the movable frame rises to lift the product and moreover is changed in orientation at need through the rotary cylinder and the movable frame is laterally moved, so that the sanitary earthenware not-burnt product can properly be transferred onto the rotary table at the glazing apparatus from, for example, the conveyor.

Next, explanation will be given on the effect of the present invention.

The transfer apparatus of the present invention for transferring the sanitary earthenware not-burnt product to the glazing apparatus by use of the conveyor or the like, comprises the movable frame laterally movably disposed, lifting shaft vertically movably provided at the movable frame, rotary cylinder provided at the lower portion of the lifting shaft, clamp cylinders provided at the lower end of the rotary cylinder, clamp frames laterally movably adjusted by the clamp cylinders respectively, and clamp hoses each provided at the inside of the clamp frame and for taking in air to be expanded so that the sanitary earthenware not-burnt product can be held in an embracing manner between both the clamp hoses. The transfer apparatus can laterally move the product, vertically move it by the lifting shaft, and change it in orientation by the rotary cylinder. Also, the same can be adjusted by the clamp cylinders to a product different in size, and moreover the clamp hoses are expanded to properly embrace the sanitary earthenware not-burnt product different in configuration, thereby enabling the product to be transferred to the glazing apparatus by use of the conveyor or the like. Therefore, the transfer apparatus for the sanitary earthenware not-burnt product of the invention is advantageous in that the sanitary earthenware not-burnt product different in size and configuration can be transferred to the predetermined position in a proper condition and automatically perform the transfer work without fear of creating a crack.

**Claims**

1. A transfer apparatus (1) for transferring a sanitary earthenware not-burnt product (W) to a glazing apparatus by use of a conveyor (C), characterized by comprising a movable frame (5) laterally movably disposed, a lifting shaft (8) vertically movably provided at said movable frame (5), a rotary cylinder (10) provided at the lower portion of said lifting shaft (8), clamp cylinders (11) provided at the lower end of said rotary cylinder (10), clamp frames (12) laterally movably adjustable to a distance therebetween by use of said clamp cylinders (11) respectively, and clamp hoses (13) which are provided inside said clamp frames (12) and expanded by taking air in said clamp hoses (13) respectively, thereby enabling said sanitary earthenware not-burnt product (W) to be embraced therebetween.

FIG.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | DE-A-3 432 284 (C.-A. VERBEEK)<br>* the whole document * | 1 | B65G47/90 |
| Y | GB-A-1 281 988 (G. S. MOROZ)<br>* the whole document * | 1 | |
| Y | DE-A-2 221 120 (GEBRÜDER NETZSCH MASCHINENFABRIK)<br>* the whole document * | 1 | |
| Y | DE-A-3 413 633 (DORSTENER MASCHINENFABRIK AG)<br>* the whole document * | 1 | |
| A | EP-A-0 341 387 (MICHAEL VOIT GMBH)<br>* the whole document * | 1 | |
| A | US-A-3 166 202 (A. J. ARNOLD)<br>* the whole document * | | |
| A | DE-A-2 421 192 (SOCIETE DE PREFABRICATION D'ELEMENTS DE CLOISONS)<br>* the whole document * | | TECHNICAL FIELDS SEARCHED (Int. Cl.5) |
| A | FR-A-2 284 540 (CETEC-DRESSLER CONSTRUCTIONS ET ETUDES THERMIQUES ET CERAMIQUES)<br>* the whole document * | | B28B<br>B65G<br>B05B |
| A | DE-A-3 409 108 (DORSTENER MASCHINENFABRIK AG)<br>* the whole document * | | |

-----

The present search report has been drawn up for all claims

| Place of search | Date of completion of the search | Examiner |
|---|---|---|
| THE HAGUE | 14 MAY 1992 | GOURIER P.A. |